# EUROPÄISCHE PATENTSCHRIFT

(11) **EP 0 940 250 B1**
(45) Veröffentlichungstag und Bekanntmachung des Hinweises auf die Patenterteilung: **28.04.2004**
(21) Anmeldenummer: 99104414.0
(22) Anmeldetag: 05.03.1999
(51) Int. Cl.: B32B 27/12, A47H 23/10

(54) **Vorhangbahn für Hochraffbare Trennvorhänge für Sporthallen, Veranstaltungs- und Messehallen, Industriehallen, Säle od. dgl.**
Curtain for high shirrable partition curtains for sports halls, exhibition halls, factory halls or the like
Rideau pour rideaux de séparation hautement plissables pour salles de sports, halls de manifestations, halls de foires, halles ou similaire

(30) Priorität: 06.03.1998 DE 19809484
(43) Veröffentlichungstag der Anmeldung: 08.09.1999
(73) Patentinhaber: Trenomat GmbH & Co. KG, 42327 Wuppertal (DE)
(72) Erfinder: Knittel, Klaus Walter, 42281 Wuppertal (DE)
(74) Vertreter: Ludewig, Karlheinrich, Dipl.-Ing.

(56) Entgegenhaltungen:
- NL-A- 9 201 117

## Beschreibung

Die Erfindung richtet sich auf eine Vorhangbahn der im Oberbegriff des Anspruches 1 genannten Art. Vorhangbahnen dieser Art werden bei Trennvorhängen verwendet, die dazu dienen größere Räume, wie etwa Sporthallen, Veranstaltungs- und Messehallen, Industriehallen, Säle od. dgl. in mehrere kleine Räume aufzuteilen.

Bei derartigen Vorhangbahnen ist es bekannt, die Vorhangbahnen aus PVC (Polyvinylchlorid) zu fertigen. PVC wird bisher deshalb verwendet, da es eine günstige Flexibilität aufweist durch die die Vorhangbahnen gut faltbar sind, es sich gut vernähen läßt und schwerentflammbar ist.

Von großem Nachteil bei Vorhängen aus PVC ist es jedoch, das im Falle eines Brandes Salzsäure und sogar Dioxine aus den Zersetzungsprodukten des PVC entstehen können, es also zu einer erheblichen Umweltbelastung kommen kann.

Das Dokument NL-A-92 011 17 offenbart eine Vorhangbahn, welche mindestens eine Lage aus Polyurethan und eine Gewebelage umfasst. Diese Vorhangbahn erfüllt nicht die Anforderungen, die an Trennvorhänge für größere Räume gestellt werden.

Aufgabe der vorliegenden Erfindung ist es, ein Material für Vorhangbahnen zu entwickeln, dass die Nachteile des bekannten Materials vermeidet aber gute Falteigenschaften und eine geeignete Belastbarkeit aufweist sowie gut zu verarbeiten ist.

Dieses wird erfindungsgemäß durch die im kennzeichnenden Teil des Anspruches 1 genannten Maßnahmen erreicht, denen folgende besondere Bedeutung zukommt.

Die Besonderheit der dort beschriebenen Maßnahmen liegt darin, als Material für die Kunststoffolie der Vorhangbahnen einen Kunststoff aus den Gruppen der Polyolefine, der Polyurethane oder der Polyester zu verwenden der eine Matrix bildet. In diese Kunststoffmatrix ist ein Vulkanisat aus einem thermoplastischen Kautschuk eingelagert. Durch diese Maßnahme wird die Flexibilität des Vorhangmaterials erhöht und eine gute Faltbarkeit der Vorhangbahn erreicht und gleichzeitig eine gute Steifigkeit/Steifheit des Vorhangmaterials. Die Kunststoffolien der Vorhangbahn lassen sich gut mit einer Gewebelage verbinden, die zwischen den Kunststoffolien der Vorhangbahn eingearbeitet wird. Durch das Zusammenwirken der Kunststoffolien und der Gewebelage der Vorhangbahn wird eine hohe Reißfestigkeit der Vorhangbahn erreicht.
Die Kunststoffematerialien gemäß Anspruch 1 zersetzen sich günstigerweise im Falle eines Brandes in unschädliche Substanzen, von denen keine Gesundheitsgefährdung ausgeht.

Gemäß Anspruch 2 kann es sinnvoll sein, wenn in die Kunststoffmatrix der Vorhangbahnen isolierte Vulkanisate eines thermoplastischen Kautschuk eingelagert sind. Durch diese Maßnahme wird die Flexibilität des Vorhangmaterials weiter erhöht und die Faltbarkeit der Vorhangbahn noch verbessert.

Gemäß den Ansprüchen 4 und 5 kann es sinnvoll sein, dem Kunststoff ein Antimonsalz zuzugeben, wodurch in vorteilhafter Weise die Entflammbarkeit der Vorhangbahnen sehr stark reduziert wird. So erfüllen die erfindungsgemäßen Vorhangbahnen die Schwerentflammbarkeitskriterien nach DIN 4102 § 16 B1.

Günstigerweise werden die Salze, entsprechend Anspruch 6 mittels eines organischen Trägermaterials in den Kunststoff der Vorhangbahn eingebracht. Dieser Träger besteht vorzugsweise aus einem bromierten und/oder chlorierten aliphatischen Kohlenwasserstoff. Bromierte und/oder chlorierte cyclische Kohlenwasserstoffe können theoretisch auch als Träger eingesetzt werden, jedoch ist es z.B. von den Verbindungen Polybrom-Biphenylen (PBBS) und Polybrom-Diphenylaxiden (PBDOS) bekannt, dass sie bei Feuer und hoher Temperatureinwirkung die Dioxinbildung begünstigen.

Nach Anspruch 7 kann es aber auch sinnvoll sein Salze als Additive dem Kunststoff zuzugeben, bei denen die Zugabe einer Trägersubstanz entfällt. Diese Salze können z.B. sein: Magnesiumhydroxide, Aluminiumhydroxide oder Phosphate.

Nach Anspruch 8 ist es ebenfalls möglich, als entflammungshemmendes Additiv einen Stoff aus der Gruppe der Melamine zu verwenden. Eine Trägersubstanz wird auch hierbei dann nicht mehr benötigt.

Die Ansprüche 9 und 10 geben bevorzugte Mischungsverhältnisse der Ausgangsstoffe zur Kunststoffolien Herstellung wieder, mit denen die vorteilhaften Eigenschaften der Erfindung, besonders gut erreicht werden. Die aus diesen Mischungen gefertigten Vorhangbahnen sind sehr gut vernähbar, flexibel, lassen sich sehr gut falten und ohne Spuren reversibel knicken. Schließlich weisen die demgemäßen Vorhangbahnen eine ideale Steifigkeit auf, die das Material belastbar machen. Diese Eigenschaften sind wichtig, da die Vorhangbahnen in den Trennvorängen sich in heruntergelassenem Zustand wie eine Wand verhalten sollen, während sie sich in hochgefahrenem Zustand eng zusammenfalten lassen müssen ohne beim Wiederherunterfahren Spuren dieses Einfaltens, wie Knicke, Risse etc. zurückzubehalten.

Weitere Maßnahmen und Vorteile der Erfindung ergeben sich aus den Unteransprüchen und der nachfolgenden Beschreibung, in der eine Materialzusammensetzung aufgeführt ist.

Eine Ausführungsform der erfindungsgemäßen Vorhangbahn, die z.B. ein Gewicht von 1.200 g/m² hat besteht aus zwei Lagen einer Kunststoffolie, zwischen denen eine Gewebelage angeordnet ist. Die Kunststoffolie besteht dabei aus einer Matrix aus Polypropylen in der isolierte Vulkanisate aus Ethylen-Propylen-Di-Methylen (EPDM) eingelagert sind. Die Vulkanisate sind dabei ungefähr so in der Matrix angeordnet wie die Kiesel in einem Konglomerat.

In der Kunststoffmatrix eingelagert ist ebenfalls noch Antimonoxid (Sb₂ O₃) das in dem vorliegenden Ausführungsbeispiel mittels eines bromierten aliphatischen Kohlenwasserstoff als Trägersubstanz in das Polypropylen der Matrix eingebracht worden ist.

Die ungefähren Mengenverhältnisse der Substanzen in diesem Ausführungsbeispiel sind (alle Angaben in Gewichtsprozent): Polypropylen 43%, EPDM 43%, Antimonoxid 4%, 6% eines bromierten aliphatischen Kohlenwasserstoffs und 4% Pigment.

Zur Herstellung der Kunststoffolie werden die Substanzen in ihren jeweiligen %-Anteilen gemischt und dann als Granulate zur Weiterverarbeitung in einen Extruder gegeben, wo die Kunststoffolie erzeugt wird. Die aus dem vorgenannten Mischungsverhältnis erzeugte Kunststoffolie weist dabei eine Shore A Härte von 75 auf.

Neben dem im vorgenannten Ausführungsbeispiel verwendeten Polypropylen sind folgende Kunststoffe für die Matrix der Kunststoffolie besonders geeignet: Polyethylen, Ethylen-Methylenacrylat, Ethylen-Venylacrylat, Polyester und Polyurethane. Der Anteil dieser Matrixmaterialien kann dabei zwischen 15 und 50 % variiert werden (Anteile in Gewichtsprozent). Anteile von über 50 % verschlechtern die Falteigenschaften der Vorhangbahnen merklich und führen dazu, daß die Vorhangbahnen sich nicht mehr zusammenfalten lassen.

Der Anteil an thermoplastischem Kautschuk, wie z.B. EPDM liegt idealerweise zwischen 36 und 71 % (Anteile in Gewichtsprozent).

Gute Ergebnisse der Schwerentflammbarkeit wurden mit Beimengungen der folgenden Additive (Anteile in Gewichtsprozent) erreicht: 2 - 6 % Antimonoxid (Sb₂ O₃) und/oder Antimon(V)-oxid (Sb₂ O₅); 20 - 30 % Magnesiumhydroxide; 20 - 30 % Aluminiumhydroxide; 8 - 12 % Phosphate. Diese der Schwerentflammbarkeit dienenden Additive werden zusammen mit einem bromierten und/oder chlorierten aliphatischen Kohlenwasserstoff als Trägerstoff mit einem Gewichtsanteil von 2 - 10 % in den Kunststoff der Matrix eingebracht.
Das Additiv Melamin kann mit einem Anteil von 8 - 12 % ohne Zugabe des Trägerstoffs in den Matrix Kunststoff eingebracht werden.

Das Pigment kann mit einen Anteil von 0,5 10 % Gewichtsprozent dem Gemisch zur Kunststoffolienherstellung beigegeben werden.

Die Shore A Härte der fertigen Kunststoffolien für die Vorhangbahnen ist 70 bis 80.

Es bleibt nun noch zu bemerken, dass die hier dargestellte Ausführungsform nur eine beispielhafte Verwirklichung der Erfindung ist. Diese ist jedoch nicht darauf beschränkt. So können insbesondere noch andere der Schwerentflammbarkeit dienende Salze zur Anwendung kommen, als die hier beschriebenen.

## Patentansprüche

1. Vorhangbahn für hochraffbare Trennvorhänge für Sporthallen, Veranstaltungs- und Messehallen, Industriehallen, Säle od. dgl., bestehend aus zwei Lagen einer Kunststoffolie zwischen denen eine Gewebelage angeordnet ist,
**dadurch gekennzeichnet,**
**dass** die Kunststoffolie der Vorhangbahnen aus einer Matrix aus einem Kunststoff der Gruppe der Polyolefine oder Polyurethane oder Polyester besteht, und in dieser Matrix Vulkanisate aus der Gruppe der thermoplastischen Kautschuke eingelagert sind.

2. Vorhangbahn nach Anspruch 1, **dadurch gekennzeichnet, dass** in der Kunststoffmatrix isolierte Vulkanisate aus der Gruppe der thermoplastischen Kautschuke eingelagert ist.

3. Vorhangbahn nach einem der Ansprüch 1 und 2, **dadurch gekennzeichnet, dass** der thermoplastische Kautschuk aus dem Material EPDM (Ethylen-Propylen-Di-Methylen) besteht.

4. Vorhangbahn nach einem oder mehreren der Ansprüche 1 bis 3, **dadurch gekennzeichnet, dass** in der Kunststoffmatrix ein die Schwerentflammbarkeit förderndes Additiv eingelagert ist.

5. Vorhangbahn nach einem oder mehreren der Ansprüche 1 bis 4, **dadurch gekennzeichnet, dass** das Additiv Antimonoxid (Sb₂ O₃) und/oder Antimon(V)-oxid (Sb₂ O₅) ist.

6. Vorhangbahn nach einen oder mehreren der Ansprüche 1 bis 5, **dadurch gekennzeichnet, dass** das Additiv in Verbindung mit einem bromierten und/oder chlorierten aliphatischen Kohlenwasserstoff in die Matrix der Vorhangbahn eingebracht wird.

7. Vorhangbahn nach einem oder mehreren der Ansprüche 1 bis 4, **dadurch gekennzeichnet, dass** das Additiv ein Salz aus der Gruppe der
- Magnesiumhydroxide
- Aluminiumhydroxide
- Phosphate
ist.

8. Vorhangbahn nach einem oder mehreren der Ansprüche 1 bis 4, **dadurch gekennzeichnet, dass** das Additiv ein Melamin ist.

9. Vorhangbahn nach einem oder mehreren der Ansprüche 1 bis 6, **dadurch gekennzeichnet, dass** die Kunststoffolie folgende Zusammensetzung aufweist (Angaben in Gewichtsprozent):
| | |
|---|---|
| 15 - 50 % | eines Kunstoffs aus der Gruppe der Polyolefine oder Polyurethane oder Polyester |
| 36 - 71 % | eines thermoplastischen Kautschuks |
| 8 - 30 % | eines die Schwerentflammbarkeit fördernden Additivs |
| 2 - 10 % | eines bromierten aliphatischen Kohlenwasserstoffs |
| 0,5 - 10 % | Pigment |

10. Vorhangbahn nach einem oder mehreren der Ansprüche 1 bis 6, **dadurch gekennzeichnet, dass** die Kunststoffolie folgende Zusammensetzung aufweist (Angaben in Gewichtsprozent):
| | |
|---|---|
| 43 % | eines Kunstoffs aus der Gruppe der Polyolefine oder Polyurethane oder Polyester |
| 43 % | eines thermoplastischen Kautschuks |
| 4 % | eines die Schwerentflammbarkeit fördernden Additivs |
| 6 % | eines bromierten aliphatischen Kohlenwasserstoffs |
| 4 % | Pigment |

## Claims

1. Curtaining for highly gatherable partitioning curtains for gymnasia, event and exhibition halls, factory premises, auditoria or similar applications, consisting of two layers of a plastic film between which a single ply fabric is sandwiched and
**characterised by** the fact that
the plastic film consists of a matrix of a plastic from the polyolefin or polyurethane or polyester group and that in this matrix vulcanisates from the thermoplastic rubber group are incorporated.

2. Curtaining according to Claim 1, **characterised by** the fact that in the plastic matrix isolated vulcanisates from the thermoplastic rubber group are incorporated.

3. Curtaining according to Claims 1 and 2, **characterised by** the fact that the thermoplastic rubber consists of the material EPDM (Ethylene-Propylene-Di-Methylene).

4. Curtaining according to one or several of Claims 1 to 3, **characterised by** the fact that in the plastic matrix an additive to promote flame-retardance is incorporated.

5. Curtaining according to one or several of Claims 1 to 4, **characterised by** the fact that the additive is antimony oxide (Sb₂ O₃) and/or antimony (V) oxide (Sb₂ O₅).

6. Curtaining according to one or several of Claims 1 to 5, **characterised by** the fact that the additive is included in the curtain matrix in compound with a brominated and/or chlorinated aliphatic hydrocarbon.

7. Curtaining according to Claims 1 to 4, **characterised by** the fact that the additive is a salt from the
- Magnesium hydroxides
- Aluminium hydroxides or
- Phosphates
Group.

8. Curtaining according to one or several of Claims 1 to 4, **characterised by** the fact that the additive is a melamine.

9. Curtaining according to one or several of Claims 1 to 6, **characterised by** the fact that the plastic film displays the following composition (figures in percentage weight)
| | |
|---|---|
| 15 - 50% | of a plastic from the polyolefin or polyurethane or polyester groups |
| 37 - 71% | of a thermoplastic rubber |
| 8 - 30% | of a flame-retardance promoting additive. |
| 2 - 10% | of a brominated aliphatic hydrocarbon |
| 0.5 - 10% | pigment |

10. Curtaining according to one or several of Claims 1 to 6, **characterised by** the fact that the plastic film possesses the following composition:
| | |
|---|---|
| 43% | of a plastic from the polyolefin or polyurethane or polyester groups |
| 43% | of a thermoplastic rubber |
| 4% | of a flame-retardance promoting additive. |
| 6% | of a brominated aliphatic hydrocarbon |
| 4% | pigment |

## Revendications

1. Rideau pour rideaux de séparation hautement plissables destinés aux salles de sports, halls de manifestations et de foires, halls industriels, salles ou assimilés, comprenant deux couches d'une feuilles de matière plastique entre lesquelles est agencée une couche textile,
**caractérisé en ce que**
la feuille de matière plastique formant les rideaux se compose d'une matrice d'un plastique appartenant au groupe des polyoléfines ou polyuréthanes ou polyester, et **en ce que** dans cette matrice ont été insérés des vulcanisats issus du groupe des caoutchoucs thermoplastiques.

2. Rideau selon la revendication 1, **caractérisé en ce que** dans la matrice de matière plastique ont été insérés des vulcanisats isolés issus du groupe des caoutchoucs thermoplastiques.

3. Rideau selon l'une des revendications 1 et 2, **caractérisé en ce que** le caoutchouc thermoplastique se compose d'EPDM (éthylène-propylène-di-méthylène).

4. Rideau selon une ou plusieurs des revendications 1 à 3, **caractérisé en ce que** dans la matrice de matière plastique a été inséré un additif promouvant l'ininflammabilité du rideau.

5. Rideau selon une ou plusieurs des revendications 1 à 4, **caractérisé en ce que** l'additif est de l'oxyde d'antimoine (Sb₂ O₃) et/ou de l'oxyde V d'antimoine (Sb₂O₅).

6. Rideau selon une ou plusieurs des revendications 1 à 5, **caractérisé en ce que** l'on insère l'additif en association avec un hydrocarbure aliphatique bromé et/ou chloré dans la matrice du rideau.

7. Rideau selon une ou plusieurs des revendications 1 à 4, **caractérisé en ce que** l'additif est un sel issu du groupe des
- Hydroxydes de magnésium
- Hydroxydes d'aluminium
- Phospates.

8. Rideau selon une ou plusieurs des revendications 1 à 4, **caractérisé en ce que** l'additif est une mélamine.

9. Rideau selon une ou plusieurs des revendications 1 à 6, **caractérisé en ce que** la feuille de matière plastique présente la composition suivante (indications sous forme de pourcentages pondéraux):
| | |
|---|---|
| 15 - 50 % | d'une matière plastique issue du groupe des polyoléfines ou des polyuréthanes ou des polyesters |
| 36 - 71 % | d'un caoutchouc thermoplastique |
| 8 - 30 % | d'un additif promouvant l'ininflammabilité du rideau |
| 2 - 10 % | d'un hydrocarbure aliphatique bromé |
| 0,5 - 10 % | de pigment |

10. Rideau selon une ou plusieurs des revendications 1 à 6, **caractérisé en ce que** la feuille de matière plastique présente la composition suivante (indications sous forme de pourcentages pondéraux):
| | |
|---|---|
| 43 % | d'une matière plastique issue du groupe des polyoléfines ou des polyuréthanes ou des polyesters |
| 43 % | d'un caoutchouc thermoplastique |
| 4 % | d'un additif promouvant l'ininflammabilité du rideau |
| 6 % | d'un hydrocarbure aliphatique bromé |
| 4 % | de pigment |
